# EUROPÄISCHE PATENTSCHRIFT

(11) **EP 3 252 334 B1**
(45) Veröffentlichungstag und Bekanntmachung des Hinweises auf die Patenterteilung: **24.07.2019**
(21) Anmeldenummer: 17169914.3
(22) Anmeldetag: 08.05.2017
(51) Int. Cl.: F16D 23/02

(54) **BAUEINHEIT FÜR EINE SYNCHRONISIERUNGSEINHEIT EINES ZAHNRÄDERWECHSELGETRIEBES**
SYNCHRONIZATION UNIT FOR A GEARBOX
UNITÉ DE SYNCHRONISATION D'UNE BOITE MANUELLE À ENGRENAGE

(30) Priorität: 01.06.2016 EP 16172494
(43) Veröffentlichungstag der Anmeldung: 06.12.2017
(73) Patentinhaber: Oerlikon Friction Systems (Germany) GmbH, 28719 Bremen (DE)
(72) Erfinder: Christoffer, Ulf, 28719 Bremen (DE); Frede, Ralf, 27711 Freissenbüttel (DE); Spreckels, Marcus, 28832 Oyten (DE)
(74) Vertreter: Intellectual Property Services GmbH

(56) Entgegenhaltungen:
- EP-A1- 2 677 187
- DE-A1- 10 055 861
- DE-A1-102007 062 467

## Beschreibung

Die Erfindung betrifft eine Baueinheit für eine Synchronisierungseinheit eines Zahnräderwechselgetriebes gemäss dem Oberbegriff des unabhängigen Anspruchs 1. Die Erfindung betrifft weiter ein Verfahren zur Synchronisierung eines Gangrades eines Zahnräderwechselgetriebes gemäss dem unabhängigen Anspruch 7. Zudem betrifft die Erfindung einen Reibring gemäss dem Oberbegriff des Anspruchs 11 und eine Synchronisierungseinheit für ein Zahnräderwechselgetriebe gemäss dem Anspruch 14 sowie ein Zahnräderwechselgetriebe für ein Fahrzeug gemäss dem Anspruch 15.

In der EP 2 677 187 A1 wird eine Baueinheit für eine Synchronisierungseinheit eines Zahnräderwechselgetriebes eines Fahrzeugs beschrieben. Die Baueinheit verfügt über einen Reibring, welcher einen konischen Reibringkörper mit einer inneren Reibfläche und einer äusseren Einbaufläche umfasst, die den Reibringkörper in einer senkrecht zu einer axialen Reibringachse verlaufenden Umfangsrichtung jeweils begrenzen. Die innere Reibfläche erstreckt sich dabei unter einem vorgegebenen Reibwinkel und die äussere Einbaufläche unter einem vorgegebenen Einbauwinkel jeweils konisch entlang der Reibringachse. Die Baueinheit verfügt ausserdem über einen Synchronring mit einer zur äusseren Einbaufläche des Reibrings gerichteten, korrespondierenden Kontaktfläche. Der Synchronring und der Reibring sind so ausgestaltet und angeordnet, dass bei einem Synchronisiervorgang, bei welchem der Synchronring in Richtung eines zu synchronisierenden Gangrads verschoben wird, die Kontaktfläche des Synchronrings an der äusseren Einbaufläche des Reibrings anliegt und die innere Reibfläche des Reibrings mit dem Gangrad in Reibkontakt ist.

Der Einsatz einer derartigen Baueinheit in einer Synchronisierungseinheit eines Zahnräderwechselgetriebes ermöglicht zum einen eine hohe Effizienz, also einen grossen Verstärkungseffekt zwischen Betätigungskraft und Synchronisierungsmoment und gleichzeitig einen hohen Schaltkomfort. Dies wird durch die räumliche Trennung der beiden Funktionen "Synchronisierungsmoment erzeugen" und "Reibpaarung lösen" erreicht, die bei Synchronisierungseinheiten, welche auf dem sogenannten Borg-Warner-Konzept beruhen, in ein und derselben Reibpaarung vereint sind. Die räumliche Trennung wird durch den Einsatz einer Baueinheit aus einem Reibring mit einer Reibfläche und einer Einbaufläche und einem Synchronring mit einer mit der Einbaufläche des Reibrings korrespondierenden Kontaktfläche erreicht. Die Reibfläche des Reibrings erzeugt dabei kraftschlüssig das Synchronisierungsmoment, und an der Kontaktfläche und der Einbaufläche erfolgt ein zuverlässiges Lösen des Kraftschlusses. Damit kann eine unabhängige Optimierung der beiden Funktionen hinsichtlich ihrer spezifischen Anforderungen erfolgen.

Beim Einsatz der beschriebenen Baueinheit in einer Synchronisierungseinheit kann es insbesondere bei niedrigen Betriebstemperaturen zu Komfort- und Funktionsstörungen in Form von einem so genannten zweiten Druckpunkt oder auch zu blockierten Schaltungen kommen.

Demgegenüber ist es die Aufgabe der Erfindung, eine Baueinheit für eine Synchronisierungseinheit eines Zahnräderwechselgetriebes vorzuschlagen, welche einen funktionssicheren und komfortablen Betrieb des Zahnräderwechselgetriebes ermöglicht.

Die diese Aufgabe lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit eine Baueinheit für eine Synchronisierungseinheit eines Zahnräderwechselgetriebes, die einen Reibring und einen Synchronring umfasst. Der Reibring umfasst einen konischen Reibringkörper mit einer Reibfläche und einer Einbaufläche, die den Reibringkörper in einer senkrecht zu einer axialen Reibringachse verlaufenden Umfangsrichtung jeweils begrenzen, und der Synchronring eine Kontaktfläche, die zur Einbaufläche des Reibrings gerichtet ist.

Erfindungsgemäss sind der Synchronring und der Reibring so ausgestaltet und angeordnet, dass in einem Entlastungszustand eines Synchronisiervorgangs, bei welchem der Synchronring von einem zu synchronisierenden Gangrad wegbewegt ist, die geometrische Form der Einbaufläche des Reibrings von der geometrischen Form der Kontaktfläche des Synchronrings abweicht, und in einem Belastungszustand des Synchronisiervorgangs, bei welchem der Synchronring in Richtung des zu synchronisierenden Gangrads verschoben ist, die geometrische Form der Einbaufläche des Reibrings mit der geometrischen Form der Kontaktfläche des Synchronrings korrespondiert, so dass die Kontaktfläche des Synchronrings an der Einbaufläche des Reibrings vollflächig anliegt und die Reibfläche des Reibrings mit dem Gangrad in Reibkontakt ist.

Im Rahmen dieser Erfindung stellt der Entlastungszustand den Zustand des Synchronisiervorgangs dar, in welchem der Synchronring von dem zu synchronisierenden Gangrad wegbewegt ist. Im Entlastungszustand sind die Kontaktfläche des Synchronrings und die Einbaufläche des Reibringes in Umfangsrichtung im Wesentlichen voneinander gelöst, d.h die Kontaktfläche liegt an der Einbaufläche nicht vollständig an. Umgekehrt stellt der Belastungszustand den Zustand des Synchronisiervorgangs dar, in welchem der Synchronring in Richtung des zu synchronisierenden Gangrads verschoben ist. Im Belastungszustand ist die Reibfläche des Reibrings mit dem Gangrad in Reibkontakt und erzeugt dabei kraftschlüssig ein Synchronisierungsmoment. Der Begriff "korrespondiert" bedeutet im Rahmen dieser Anmeldung, dass im Belastungszustand die geometrische Form der Einbaufläche des Reibrings und die geometrischen Form der Kontaktfläche des Synchronrings derart aneinander angepasst sind, dass die Kontaktfläche des Synchronrings an der Einbaufläche des Reibrings in Umfangsrichtung über den gesamten Umfang des Reibrings vollflächig, d.h vollständig anliegt.

Weiter sind im Rahmen der Erfindung die Kontaktfläche des Synchronrings und/oder die Einbaufläche des Reibrings elastisch verformbar, so dass bei der Überführung der Baueinheit vom Entlastungszustand in den Belastungszustand die Kontaktfläche des Synchronrings und/oder die Einbaufläche des Reibrings derart elastisch verformt wird, bis die geometrische Form der Einbaufläche des Reibrings mit der geometrischen Form der Kontaktfläche des Synchronrings korrespondiert. Aufgrund der elastischen Verformung kehren die Kontaktfläche des Synchronrings und/oder die Einbaufläche des Reibrings bei der Überführung der Baueinheit vom Belastungszustand in den Entlastungszustand wieder in ihren ursprünglichen Zustand zurück, so dass im Entlastungszustand die geometrische Form der Einbaufläche des Reibrings und die geometrische Form der Kontaktfläche des Synchronrings voneinander abweichen. Dies im Unterschied zum Stand der Technik, wo im Entlastungszustand die geometrische Form der Einbaufläche des Reibrings nicht von der geometrischen Form der Kontaktfläche des Synchronrings abweicht und bei der Überführung der Baueinheit vom Entlastungszustand in den Belastungszustand die Kontaktfläche des Synchronrings und/oder die Einbaufläche des Reibrings nicht elastisch verformt bzw. vorgespannt werden.

Im Rahmen der Erfindung kann die Baueinheit derart ausgebildet sein, dass sich bei der Überführung der Baueinheit vom Entlastungszustand in den Belastungszustand lediglich die Kontaktfläche des Synchronrings elastisch verformt, lediglich die Einbaufläche des Reibrings elastisch verformt, oder die Kontaktfläche des Synchronrings und die Einbaufläche des Reibrings gemeinsam elastisch verformen.

Ein wesentlicher Vorteil der erfindungsgemässen Baueinheit liegt darin, dass die Adhäsion zwischen der Einbaufläche des Reibrings und der Kontaktfläche des Synchronrings minimiert wird. Hierdurch wird ein "Zusammenkleben" von Reibring und Synchronring verhindert, so dass die oben beschriebene räumliche Trennung der Funktionen "Synchronisierungsmoment erzeugen" und "Reibpaarung lösen" gewährleistet ist, insbesondere auch bei tiefen Betriebstemperaturen, wo die Viskosität des zur Schmierung und Kühlung dienenden Getriebeöls relativ hoch ist. Dies ermöglicht eine besonders hohe Effizienz und gleichzeitig einen besonders hohen Schaltkomfort.

Die Minimierung der Adhäsion wird dabei dadurch erzielt, dass bei der Überführung der Baueinheit vom Belastungszustand in den Entlastungszustand ein Teil der Adhäsionskraft durch die Rückstellkraft der Kontaktfläche des Synchronrings und/oder der Einbaufläche des Reibrings überwunden wird. Die Vorspannung der Kontaktfläche des Synchronrings und/oder der Einbaufläche des Reibrings, die bei der Überführung in den Belastungszustand aufgebaut wird, unterstützt damit, das Lösen der Einbaufläche des Reibrings und der Kontaktfläche des Synchronrings bei der Überführung der Baueinheit vom Belastungszustand in den Entlastungszustand. Im Unterschied zum Stand der Technik wirkt damit bei der Überführung der Baueinheit vom Belastungszustand in den Entlastungszustand eine Rückstellkraft, die der Adhäsionskraft entgegengerichtet ist.

In einem bevorzugten Ausführungsbeispiel erstrecken sich die Einbaufläche des Reibrings unter einem Einbauwinkel und die Kontaktfläche des Synchronrings unter einem Kontaktwinkel jeweils konisch entlang der Reibringachse, wobei in dem Entlastungszustand der Einbauwinkel und der Kontaktwinkel verschieden ausgebildet sind, und in dem Belastungszustand der Einbauwinkel mit dem Kontaktwinkel korrespondiert. Im Entlastungszustand stellt sich dadurch zwischen der Einbaufläche und der Kontaktfläche ein minimaler Differenzwinkel von bis zu 5° ein. Im Belastungszustand dagegen sind der Einbauwinkel und der Kontaktwinkel gleich ausgebildet, d.h im Belastungszustand verschwindet der Differenzwinkel. Aufgrund des Differenzwinkels zwischen der Einbaufläche und der Kontaktfläche im Entlastungszustand wird bei der Überführung der Baueinheit vom Entlastungszustand in den Belastungszustand die Kontaktfläche des Synchronrings und/oder die Einbaufläche des Reibrings gekippt, so dass sich der Einbauwinkel an den Kontaktwinkel anpasst. Es hat sich gezeigt, dass diese Ausgestaltung der Baueinheit eine besonders niedrige Adhäsion zwischen dem Reibring und dem Synchronring ermöglicht.

Bevorzugt, aber nicht notwendig, kann in dem Entlastungszustand der Einbauwinkel grösser als der Kontaktwinkel sein.

In einem für die Praxis sehr wichtigen Ausführungsbeispiel ist in dem Entlastungszustand der Reibringkörper des Reibrings derart ausgebildet, dass die Einbaufläche des Reibrings in Umfangsrichtung einen variierenden ersten Krümmungsradius aufweist, wobei im Belastungszustand der erste Krümmungsradius der Einbaufläche konstant ausgebildet ist. Die geometrische Form der Einbaufläche des Reibrings weicht daher im Entlastungszustand von einer Kreisform ab. Beispielsweise ist die geometrische Form der Einbaufläche im Entlastungszustand oval, als ein abgerundetes Polygon, wie z.B ein abgerundetes Dreieck, ausgebildet. Bei der Überführung in den Belastungszustand wird die Einbaufläche derart elastisch verformt, dass die Einbaufläche im Belastungszustand an die geometrische Form der Kontaktfläche anpasst ist. Auch diese Ausgestaltung der Baueinheit ermöglicht eine besonders niedrige Adhäsion zwischen dem Reibring und dem Synchronring.

Auch hat es sich als vorteilhaft herausgestellt, wenn der Reibring und der Synchronring aus unterschiedlichen Materialien bestehen. So ist es von Vorteil, wenn der Reibringkörper aus einem Material mit einem niedrigen Elastizitätsmodul, z.B einem Blech, und der Synchronring aus einem Material mit einem höheren Elastizitätsmodul, z.B Messing, bestehen. Über eine derartige Materialpaarung ist eine gute elastische Verformung des Reibringkörpers bei der Überführung vom Entlastungszustand in den Belastungszustand sichergestellt. Zudem kann durch die Materialpaarung Blech und Messing die Adhäsion zwischen Reibring und Synchronring weiter verringert werden, da diese eine geringe Adhäsionsneigung aufweist.

Die vorliegende Erfindung betrifft weiter ein Verfahren zur Synchronisierung eines Gangrades eines Zahnräderwechselgetriebes mittels einer erfindungsgemässen Baueinheit einer Synchronisierungseinheit des Zahnräderwechselgetriebes, wobei die Baueinheit umfasst: einen Reibring, welcher einen konischen Reibringkörper mit einer Reibfläche und einer Einbaufläche aufweist, die den Reibringkörper in einer senkrecht zu einer axialen Reibringachse verlaufenden Umfangsrichtung jeweils begrenzen, und einen Synchronring mit einer zur Einbaufläche des Reibrings gerichteten Kontaktfläche. Das Verfahren umfasst die folgenden Schritte:
▪ Bereitstellen einer erfindungsgemässen Baueinheit nach einem der Ansprüche 1 bis 6,
▪ Verschieben des Synchronringes in Richtung des zu synchronisierenden Gangrades während eines Belastungszustandes eines Synchronisiervorgangs, wobei während des Belastungszustandes die geometrische Form der Einbaufläche des Reibrings und die geometrische Form der Kontaktfläche des Synchronrings derart aneinander angepasst werden, dass sich in Umfangsrichtung die Kontaktfläche des Synchronrings und die Einbaufläche des Reibrings formschlüssig berühren, und die Reibfläche des Reibrings mit dem Gangrad in Reibkontakt gebracht wird, und
▪ Wegbewegen des Synchronringes von dem zu synchronisierenden Gangrad während eines Entlastungszustandes des Synchronisiervorgangs, wobei während des Entlastungszustandes die geometrische Form der Einbaufläche des Reibrings oder die geometrische Form der Kontaktfläche des Synchronrings derart verformt wird, dass die geometrische Form der Einbaufläche des Reibrings und die geometrische Form der Kontaktfläche des Synchronrings voneinander abweichen.

In einem für die Praxis sehr wichtigen Ausführungsbeispiel wird während des Belastungszustandes die geometrische Form der Einbaufläche des Reibrings an die geometrische Form der Kontaktfläche des Synchronrings angepasst, und während des Entlastungszustandes die geometrische Form der Einbaufläche des Reibrings derart verformt, dass die geometrische Form der Einbaufläche des Reibrings von der geometrischen Form der Kontaktfläche des Synchronrings abweicht.

Vorteilhafterweise erstrecken sich die Einbaufläche des Reibrings unter einem Einbauwinkel und die Kontaktfläche des Synchronrings unter einem Kontaktwinkel jeweils konisch entlang der Reibringachse, und während des Belastungszustands wird der Einbauwinkel an den Kontaktwinkel angepasst, und während des Entlastungszustands wird die Einbaufläche des Reibrings derart verformt, dass der Einbauwinkel vom Kontaktwinkel abweicht.

Weiter ist es von Vorteil, wenn die Einbaufläche des Reibrings in Umfangsrichtung einen ersten Krümmungsradius und die Kontaktfläche des Synchronrings in Umfangsrichtung einen zweiten Krümmungsradius aufweist, und während des Belastungszustands der erste Krümmungsradius der Einbaufläche an den zweiten Krümmungsradius der Kontaktfläche angepasst wird, und während des Entlastungszustands die Einbaufläche des Reibrings derart verformt wird, dass der erste Krümmungsradius der Einbaufläche von dem zweiten Krümmungsradius der Kontaktfläche abweicht.

Die Erfindung betrifft zudem einen Reibring für eine erfindungsgemässe Baueinheit nach einem der Ansprüche 1 bis 6, wobei der Reibring einen konischen Reibringkörper mit einer Reibfläche und einer Einbaufläche umfasst, die den Reibringkörper in einer senkrecht zu einer axialen Reibringachse verlaufenden Umfangsrichtung jeweils begrenzen.

Erfindungsgemäss ist der Reibringkörper derart ausgebildet, dass die Einbaufläche des Reibrings in Umfangsrichtung einen variierenden ersten Krümmungsradius aufweist.

Bevorzugt, aber nicht notwendig, kann der Reibringkörper in Umfangsrichtung eine Trennstelle aufweisen, d.h der Reibringkörper ist als ein Ring mit einer Unterbrechung ausgeführt.

Auch hat es sich als vorteilhaft herausgestellt, wenn der Reibring aus Blech besteht. Hierdurch ist eine gute elastische Verformung des Reibrings gewährleistet.

Weiter betrifft die Erfindung eine Synchronisierungseinheit für ein Zahnräderwechselgetriebe mit einer erfindungsgemässen Baueinheit nach einem der Ansprüche 1 bis 6 und ein Zahnräderwechselgetriebe für ein Fahrzeug mit einer Baueinheit nach einem der Ansprüche 1 bis 6.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: eine Synchronisierungseinheit mit einer Baueinheit aus Reibring und Synchronring;
- Fig. 2a: einen Schnitt entlang der Schnittlinie I-I gemäss Fig. 1 durch ein erstes Ausführungsbeispiel einer erfindungsgemässen Baueinheit, die sich in einem Entlastungszustand eines Synchronisiervorgangs befindet;
- Fig. 2b: einen Schnitt entlang der Schnittlinie I-I gemäss Fig. 1 durch ein erstes Ausführungsbeispiel einer erfindungsgemässen Baueinheit, die sich in einem Belastungszustand eines Synchronisiervorgangs befindet;
- Fig. 3a: eine Teilseitenansicht X nach Fig. 1 eines zweiten Ausführungsbeispiels einer erfindungsgemässen Baueinheit, die sich in einem Entlastungszustand eines Synchronisiervorgangs befindet und
- Fig. 3b: eine Teilseitenansicht X nach Fig. 1 eines zweiten Ausführungsbeispiels einer erfindungsgemässen Baueinheit, die sich in einem Belastungszustand eines Synchronisiervorgangs befindet.

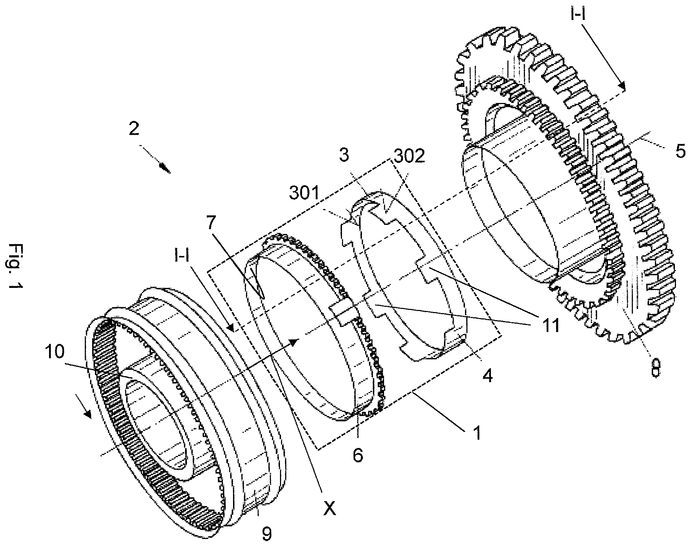

Fig.1 zeigt in schematischer Darstellung eine Synchronisierungseinheit 2 mit einer Baueinheit 1 umfassend einen Reibring 4 und einen Synchronring 6. Die Synchronisierungseinheit 2 weist neben der Baueinheit 1 in an sich bekannter Weise weiter eine Schiebemuffe 9 mit einem Synchronkörper 10 und ein Gangrad 8 auf, wobei die vorgenannten Komponenten derart koaxial zu einer Reibringachse 5 angeordnet sind, dass während des Synchronisierungsvorgangs der Synchronring 6 durch die Schiebemuffe 9 gemeinsam mit dem Reibring 4 entlang der Reibringachse 5 in Richtung zum Gangrad 8 verschiebbar ist, so dass der Reibring 4 mit dem Gangrad 8 in Eingriff bringbar ist.

Der Reibring 4 umfasst einen konischen Reibringkörper 3 mit einer inneren Reibfläche 301 und einer äusseren Einbaufläche 302, die den Reibringkörper 3 in einer senkrecht zu der axialen Reibringachse 5 verlaufenden Umfangsrichtung U jeweils begrenzen. Am Reibringkörper 3 sind Verdrehsicherungen 11 vorgesehen, die sich entlang der Reibringachse 5 erstrecken und ein Verdrehen des Reibrings 4 im Betriebszustand verhindern.

An der inneren Reibfläche 301 kann eine nicht explizit dargestellte Reibbeschichtung vorgesehen sein, insbesondere ein Reibbeschichtung in Form eines Karbon Reibbelags, die unter anderem dazu dienen kann, eine resultierende hohe mechanische und / oder thermische Belastung der Reibpaarung zumindest teilweise zu kompensieren.

In der Baueinheit 1 gemäss Fig.1 ist der Reibringkörper 3 in Umfangsrichtung U geschlossen ausgebildet. Auch ist es aber möglich, dass der Reibringkörper 3 in Umfangsrichtung U eine Trennstelle aufweist, d.h als ein geschlitzter Ringkörper 3 ausgeführt ist.

Der Synchronring 6 weist eine zur Einbaufläche 302 des Reibrings 4 gerichtete Kontaktfläche 7 auf und hat an sich bekannte, nicht näher dargestellte Kopplungstaschen zur Aufnahme der Verdrehsicherungen 11 des Reibrings 4.

Bei der Baueinheit 1 gemäss Fig. 1 bestehen der Reibring 4 und der Synchronring 6 aus unterschiedlichen Materialien. So sind der Reibringkörper 3 aus einem Blech und der Synchronring 6 aus Messing gefertigt.

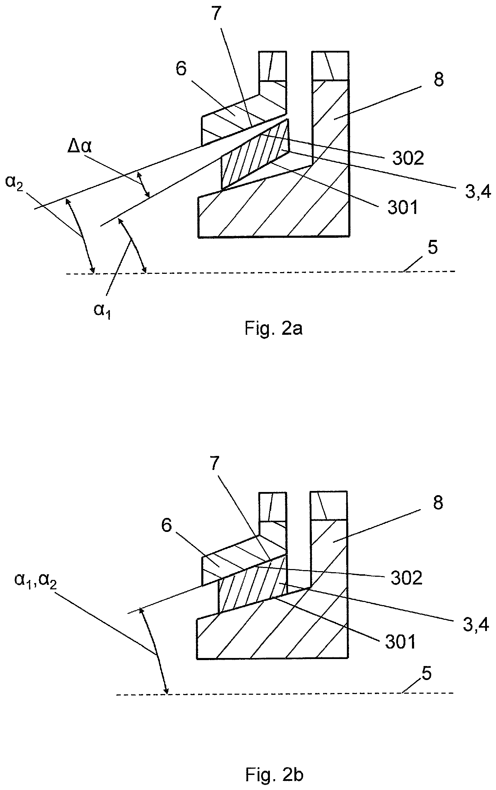

Gemäss einem ersten Ausführungsbeispiel einer erfindungsgemässen Baueinheit 1 nach Fig. 2a und 2b erstrecken sich die Einbaufläche 302 des Reibrings 4 unter einem Einbauwinkel α₁ und die Kontaktfläche 7 des Synchronrings 6 unter einem Kontaktwinkel α₂ jeweils konisch entlang der Reibringachse 5.

Fig.2a zeigt die Baueinheit 1 im Entlastungszustand des Synchronisiervorgangs, in welchem der Synchronring 6 von dem zu synchronisierenden Gangrad 8 wegbewegt ist. Im Entlastungszustand sind der Einbauwinkel α₁ und der Kontaktwinkel α₂ verschieden ausgebildet, so dass sich im Entlastungszustand zwischen der Einbaufläche 302 und der Kontaktfläche 7 ein minimaler Differenzwinkel Δα einstellt, der im Ausführungsbeispiel 3° beträgt. Aufgrund des Differenzwinkels Δα sind die Kontaktfläche 7 und die Einbaufläche 302 im Entlastungszustand in Umfangsrichtung U im Wesentlichen voneinander gelöst. In dem gezeigten Ausführungsbeispiel ist in dem Entlastungszustand der Einbauwinkel α₁ grösser als der Kontaktwinkel α₂ ausgebildet.

In dem beschriebenen Ausführungsbeispiel ist die Einbaufläche 302 des Reibrings 4 elastisch verformbar. Wird nun die Baueinheit 1 vom Entlastungszustand in den Belastungszustand überführt, wird die Einbaufläche 302 des Reibrings 4 von der Kontaktfläche 7 des Synchronrings 6 soweit gekippt bzw. elastisch verformt, bis sich der Einbauwinkel α₁ an den Kontaktwinkel α₂ angepasst hat. Hierdurch erfährt die Einbaufläche 302 eine Vorspannung.

Fig. 2b zeigt die Baueinheit 1 im Belastungszustand des Synchronisiervorgangs. Der Synchronring 6 ist dabei so in Richtung des zu synchronisierenden Gangrads 8 verschoben, dass die Kontaktfläche 7 des Synchronrings 6 an der Einbaufläche 302 des Reibrings 4 anliegt, wodurch ein Reibkontakt zwischen der Reibfläche 301 und dem Gangrad 8 entsteht und eine Drehzahlangleichung zwischen Gangrad 8 und Reibring 4 und damit Synchronring 6 erfolgt. Im Belastungszustand sind der Einbauwinkel α₁ und der Kontaktwinkel α₂ gleich ausgebildet, so dass der Differenzwinkel Δα im Belastungszustand verschwindet.

Aufgrund ihrer elastischen Verformung bzw. Vorspannung kehrt die Einbaufläche 302 des Reibrings 4 bei der Überführung der Baueinheit 1 vom Belastungszustand in den Entlastungszustand wieder in ihren ursprünglichen, spannungsfreien Zustand zurück, so dass sich im Entlastungszustand wieder der Differenzwinkel Δα zwischen der Einbaufläche 302 des Reibrings 4 und der Kontaktfläche 7 des Synchronrings 6 einstellt.

Bei der Überführung der Baueinheit 1 vom Belastungszustand in den Entlastungszustand wird somit ein Teil der Adhäsionskraft, die zwischen der Einbaufläche 302 und der Kontaktfläche 7 wirkt, durch eine Rückstellkraft der Einbaufläche 302 des Reibrings 4 überwunden. Die Rückstellkraft der Einbaufläche 302 unterstützt somit bei der Überführung der Baueinheit 1 vom Belastungszustand in den Entlastungszustand das Lösen der Einbaufläche 302 von der Kontaktfläche 7.

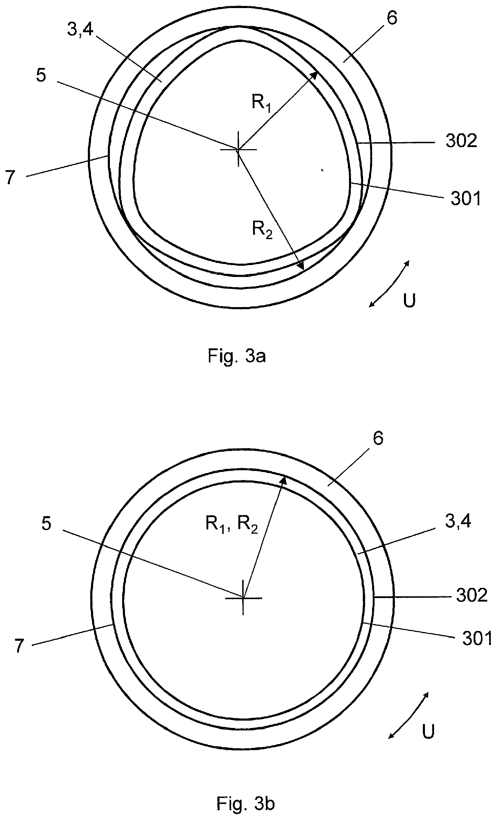

Fig. 3a und Fig.3b zeigen eine Seitenansicht X nach Fig.1 eines zweiten Ausführungsbeispiels einer erfindungsgemässen Baueinheit 1, bei welcher in dem Entlastungszustand der Reibringkörper 3 des Reibrings 4 derart ausgebildet ist, dass die Einbaufläche 302 des Reibrings 4 in Umfangsrichtung U einen variierenden ersten Krümmungsradius R₁ aufweist.

Fig.3a zeigt die Baueinheit 1 im Entlastungszustand des Synchronisiervorgangs, in welchem der Synchronring 6 von dem zu synchronisierenden Gangrad 8 wegbewegt ist. Im Entlastungszustand ist die geometrische Form der Einbaufläche 302 des Reibrings 4 als ein abgerundetes Dreieck ausgebildet, d.h im Entlastungszustand weicht die geometrische Form der Einbaufläche 302 von einer Kreisform ab. Die geometrische Form der Kontaktfläche 7 des Synchronrings 6 dagegen ist kreisförmig ausgebildet, so dass die Kontaktfläche 7 in Umfangsrichtung U einen konstanten zweiten Krümmungsradius R₂ aufweist. Aufgrund der unterschiedlichen geometrischen Ausbildung sind die Kontaktfläche 7 und die Einbaufläche 302 daher im Entlastungszustand in Umfangsrichtung U im Wesentlichen voneinander gelöst.

Auch in diesem Ausführungsbeispiel ist die Einbaufläche 302 des Reibrings 4 elastisch verformbar. Wird nun die Baueinheit 1 vom Entlastungszustand in den Belastungszustand überführt, wird die Einbaufläche 302 von der Kontaktfläche 7 des Synchronrings 6 soweit elastisch verformt, bis sich die Einbaufläche 302 im Belastungszustand an die geometrische Form der Kontaktfläche 7 anpasst hat. Hierdurch erfährt die Einbaufläche 302 eine Vorspannung.

Fig. 3b zeigt die Baueinheit 1 im Belastungszustand des Synchronisiervorgangs. Der Synchronring 6 ist dabei so in Richtung des zu synchronisierenden Gangrads 8 verschoben, dass die Kontaktfläche 7 des Synchronrings 6 an der Einbaufläche 302 des Reibrings 4 anliegt, wodurch ein Reibkontakt zwischen der Reibfläche 301 und dem Gangrad 8 entsteht und eine Drehzahlangleichung zwischen Gangrad 8 und Reibring 4 und damit Synchronring 6 erfolgt. Im Belastungszustand ist somit die geometrische Form der Einbaufläche 302 kreisförmig ausgebildet, d.h im Belastungszustand ist der erste Krümmungsradius R₁ der Einbaufläche 302 in Umfangsrichtung U ebenfalls konstant.

Aufgrund ihrer elastischen Verformung kehrt die Einbaufläche 302 des Reibrings 4 bei der Überführung der Baueinheit 1 vom Belastungszustand in den Entlastungszustand wieder in ihren ursprünglichen, spannungsfreien Zustand zurück. Bei der Überführung der Baueinheit 1 vom Belastungszustand in den Entlastungszustand wird somit ein Teil der Adhäsionskraft, die zwischen der Einbaufläche 302 und der Kontaktfläche 7 wirkt, durch eine Rückstellkraft der Einbaufläche 302 des Reibrings 4 überwunden. Die Rückstellkraft der Einbaufläche 302 unterstützt damit bei der Überführung der Baueinheit 1 vom Belastungszustand in den Entlastungszustand das Lösen der Einbaufläche 302 von der Kontaktfläche 7.

In dem Ausführungsbeispiel nach Fig.3a und 3b ist in dem Entlastungszustand die geometrische Form der Einbaufläche 302 des Reibrings 4 als ein abgerundetes Dreieck ausgebildet. Auch ist es aber möglich, dass im Entlastungszustand die geometrische Form der Einbaufläche 302 auf eine andere geometrische Art von einer Kreisform der Kontaktfläche 7 abweicht.

## Patentansprüche

1. Baueinheit (1) für eine Synchronisierungseinheit (2) eines Zahnräderwechselgetriebes mit
- einem Reibring (4), welcher einen konischen Reibringkörper (3) mit einer Reibfläche (301) und einer Einbaufläche (302) umfasst, die den Reibringkörper (3) in einer senkrecht zu einer axialen Reibringachse (5) verlaufenden Umfangsrichtung (U) jeweils begrenzen, und
- einem Synchronring (6) mit einer zur Einbaufläche (302) des Reibrings (4) gerichteten Kontaktfläche (7),
**dadurch gekennzeichnet, dass** der Synchronring (6) und der Reibring (4) so ausgestaltet und angeordnet sind, dass in einem Entlastungszustand eines Synchronisiervorgangs, bei welchem der Synchronring (6) von einem zu synchronisierenden Gangrad (8) wegbewegt ist, die geometrische Form der Einbaufläche (302) des Reibrings (4) von der geometrischen Form der Kontaktfläche (7) des Synchronrings (6) abweicht, und in einem Belastungszustand des Synchronisiervorgangs, bei welchem der Synchronring (6) in Richtung des zu synchronisierenden Gangrads (8) verschoben ist, die geometrische Form der Einbaufläche (302) des Reibrings (4) mit der geometrischen Form der Kontaktfläche (7) des Synchronrings (6) korrespondiert, so dass die Kontaktfläche (7) des Synchronrings (6) an der Einbaufläche (302) des Reibrings (4) vollflächig anliegt und die Reibfläche (301) des Reibrings (4) mit dem Gangrad (8) in Reibkontakt ist.

2. Baueinheit nach Anspruch 1, wobei sich die Einbaufläche (302) des Reibrings (4) unter einem Einbauwinkel (α₁) und die Kontaktfläche (7) des Synchronrings (6) unter einem Kontaktwinkel (α₂) jeweils konisch entlang der Reibringachse (5) erstrecken, und in dem Entlastungszustand der Einbauwinkel (α₁) und der Kontaktwinkel (α₂) verschieden ausgebildet sind, und in dem Belastungszustand der Einbauwinkel (α₁) mit dem Kontaktwinkel (α₂) korrespondiert.

3. Baueinheit nach Anspruch 2, wobei in dem Entlastungszustand der Einbauwinkel (α₁) grösser als der Kontaktwinkel (α₂) ist.

4. Baueinheit nach einem der Ansprüche 1 bis 3, wobei in dem Entlastungszustand der Reibringkörper (3) des Reibrings (4) derart ausgebildet ist, dass die Einbaufläche (302) des Reibrings (4) in Umfangsrichtung (U) einen variierenden ersten Krümmungsradius (R₁) aufweist.

5. Baueinheit nach einem der Ansprüche 1 bis 4, wobei der Reibring (4) und der Synchronring (6) aus unterschiedlichen Materialien bestehen.

6. Baueinheit nach Anspruch 5, wobei der Reibring (4) aus Blech und der Synchronring (6) aus Messing bestehen.

7. Verfahren zur Synchronisierung eines Gangrades (8) eines Zahnräderwechselgetriebes mittels einer Baueinheit (1) einer Synchronisierungseinheit (2) des Zahnräderwechselgetriebes, wobei die Baueinheit (1) umfasst:
- einen Reibring (4), welcher einen konischen Reibringkörper (3) mit einer Reibfläche (301) und einer Einbaufläche (302) aufweist, die den Reibringkörper (3) in einer senkrecht zu einer axialen Reibringachse (5) verlaufenden Umfangsrichtung (U) jeweils begrenzen, und
- einen Synchronring (6) mit einer zur Einbaufläche (302) des Reibrings (4) gerichteten Kontaktfläche (7), und
das Verfahren die folgenden Schritte umfasst:
- Bereitstellen einer Baueinheit (1) nach einem der Ansprüche 1 bis 6,
- Verschieben des Synchronringes (6) in Richtung des zu synchronisierenden Gangrades (8) während eines Belastungszustandes eines Synchronisiervorgangs, wobei während des Belastungszustandes die geometrische Form der Einbaufläche (302) des Reibrings (4) und die geometrische Form der Kontaktfläche (7) des Synchronrings (6) derart aneinander angepasst werden, dass sich in Umfangsrichtung (U) die Kontaktfläche (7) des Synchronrings (6) und die Einbaufläche (302) des Reibrings (4) formschlüssig berühren, und die Reibfläche (301) des Reibrings (4) mit dem Gangrad (8) in Reibkontakt gebracht wird, und
- Wegbewegen des Synchronringes (6) von dem zu synchronisierenden Gangrad (8) während eines Entlastungszustandes des Synchronisiervorgangs, wobei während des Entlastungszustandes die geometrische Form der Einbaufläche (302) des Reibrings (4) oder die geometrische Form der Kontaktfläche (7) des Synchronrings (6) derart verformt wird, dass die geometrische Form der Einbaufläche (302) des Reibrings (4) und die geometrische Form der Kontaktfläche (7) des Synchronrings (6) voneinander abweichen.

8. Verfahren nach Anspruch 7, wobei während des Belastungszustandes die geometrische Form der Einbaufläche (302) des Reibrings (4) an die geometrische Form der Kontaktfläche (7) des Synchronrings (6) angepasst wird, und während des Entlastungszustandes die geometrische Form der Einbaufläche (302) des Reibrings (4) derart verformt wird, dass die geometrische Form der Einbaufläche (302) des Reibrings (4) von der geometrischen Form der Kontaktfläche (7) des Synchronrings (6) abweicht.

9. Verfahren nach Anspruch 8, wobei sich die Einbaufläche (302) des Reibrings (4) unter einem Einbauwinkel (α₁) und die Kontaktfläche (7) des Synchronrings (6) unter einem Kontaktwinkel (α₂) jeweils konisch entlang der Reibringachse (5) erstrecken, und während des Belastungszustands der Einbauwinkel (α₁) an den Kontaktwinkel (α₂) angepasst wird, und während des Entlastungszustands die Einbaufläche (302) des Reibrings (4) derart verformt wird, dass der Einbauwinkel (α₁) vom Kontaktwinkel (α₂) abweicht.

10. Verfahren nach Anspruch 8 oder 9, wobei die Einbaufläche (302) des Reibrings (4) in Umfangsrichtung (U) einen ersten Krümmungsradius (R₁) und die Kontaktfläche (7) des Synchronrings (6) in Umfangsrichtung (U) einen zweiten Krümmungsradius (R₂) aufweist, und während des Belastungszustands der erste Krümmungsradius (R₁) der Einbaufläche (302) an den zweiten Krümmungsradius (R₂) der Kontaktfläche (7) angepasst wird, und während des Entlastungszustands die Einbaufläche (302) des Reibrings (4) derart verformt wird, dass der erste Krümmungsradius (R₁) der Einbaufläche (302) von dem zweiten Krümmungsradius (R₂) der Kontaktfläche (7) abweicht.

11. Reibring (4) für eine Baueinheit (1) nach einem der Ansprüche 1 bis 6, welcher Reibring (4) einen konischen Reibringkörper (3) mit einer Reibfläche (301) und einer Einbaufläche (302) umfasst, die den Reibringkörper (3) in einer senkrecht zu einer axialen Reibringachse (5) verlaufenden Umfangsrichtung (U) jeweils begrenzen, **dadurch gekennzeichnet, dass** der Reibringkörper (3) derart ausgebildet ist, dass die Einbaufläche (302) des Reibrings (4) in Umfangsrichtung (U) einen variierenden ersten Krümmungsradius (R₁) aufweist.

12. Reibring nach Anspruch 11, wobei der Reibringkörper (3) in Umfangsrichtung (U) eine Trennstelle aufweist.

13. Reibring nach Anspruch 11 oder 12, wobei der Reibring (4) aus Blech besteht.

14. Synchronisierungseinheit (2) für ein Zahnräderwechselgetriebe mit einer Baueinheit (1) nach einem der Ansprüche 1 bis 6.

15. Zahnräderwechselgetriebe für ein Fahrzeug mit einer Baueinheit (1) nach einem der Ansprüche 1 bis 6.

## Claims

1. An assembly (1) for a synchronization unit (2) of a variable ratio gear transmission comprising
- a friction ring (4) that comprises a conical friction ring body (3) having a friction surface (301) and an installation surface (302) that respectively bound the friction ring body (3) in a peripheral direction (U) extending perpendicular to an axial friction ring axis (5); and
- a synchronizer ring (6) having a contact surface (7) directed toward the installation surface (302) of the friction ring (4);
**characterized in that** the synchronizer ring (6) and the friction ring (4) are configured and arranged such that the geometrical shape of the installation surface (302) of the friction ring (4) differs from the geometrical shape of the contact surface (7) of the synchronous ring (6) in a relief state of a synchronizing process in which the synchronizer ring (6) is moved away from a gear wheel (8) to be synchronized; and **in that** the geometrical shape of the installation surface (302) of the friction ring (4) corresponds to the geometrical shape of the contact surface (7) of the synchronizer ring (6) such that the contact surface (7) of the synchronizer ring (6) contacts the installation surface (302) of the friction ring (4) over its full area and the friction surface (301) of the friction ring (4) is in friction contact with the gear wheel (8) in a load state of the synchronizing process in which the synchronizer ring (6) is displaced in the direction of the gear wheel (8) to be synchronized.

2. An assembly in accordance with claim 1, wherein the installation surface (302) of the friction ring (4) extends at an installation angle (α₁) and the contact surface (7) of the synchronizer ring (6) extends at a contact angle (α₂), in each case conically along the friction ring axis (5); and wherein the installation angle (α₁) and the contact angle (α₂) are different in the relief state and the installation angle (α₁) corresponds to the contact angle (α₂) in the load state.

3. An assembly in accordance with claim 2, wherein the installation angle (α₁) is larger than the contact angle (α₂) in the relief state.

4. An assembly in accordance with any one of the claims 1 to 3, wherein the friction ring body (3) of the friction ring (4) is configured such that the installation surface (302) of the friction ring (4) has a varying first radius of curvature (R₁) in the peripheral direction in the relief state.

5. An assembly in accordance with any one of the claims 1 to 4, wherein the friction ring (4) and the synchronizer ring (6) comprise different materials.

6. An assembly in accordance with claim 5, wherein the friction ring (4) comprises sheet metal and the synchronizer ring (6) comprises brass.

7. A method of synchronizing a gear wheel (8) of a variable ratio gear transmission by means of an assembly (1) of a synchronizing unit (2) of the variable ratio gear transmission, wherein the assembly (1) comprises:
- a friction ring (4) that has a conical friction ring body (3) having a friction surface (301) and an installation surface (302) that respectively bound the friction ring body (3) in a peripheral direction (U) extending perpendicular to an axial friction ring axis (5); and
- a synchronizer ring (6) having a contact surface (7) directed toward the installation surface (302) of the friction ring (4); and
wherein the method comprises the following steps:
- providing an assembly (1) in accordance with any one of the claims 1 to 6;
- displacing the synchronizer ring (6) in the direction of the gear wheel (8) to be synchronized during a load state of a synchronizing process, wherein the geometrical shape of the installation surface (302) of the friction ring (4) and the geometrical shape of the contact surface (7) of the synchronizer ring (6) are adapted to one another during the load state such that the contact surface (7) of the synchronizer ring (6) and the installation surface (302) of the friction ring (4) contact one another in a shape-matched manner and the friction surface (301) of the friction ring (4) is brought into friction contact with the gear wheel (8) in the peripheral direction (U); and
- moving away the synchronizer ring (6) from the gear wheel (8) to be synchronized during a relief state of the synchronizing process, wherein the geometrical shape of the installation surface (302) of the friction ring (4) or the geometrical shape of the contact surface (7) of the synchronizer ring (6) is deformed during the relief state such that the geometrical shape of the installation surface (302) of the friction ring (4) and the geometrical shape of the contact surface (7) of the synchronizer ring (6) differ from one another.

8. A method in accordance with claim 7, wherein the geometrical shape of the installation surface (302) of the friction ring (4) is adapted to the geometrical shape of the contact surface (7) of the synchronizer ring (6) during the load state; and wherein the geometrical shape of the installation surface (302) of the friction ring (4) is deformed during the relief state such that the geometrical shape of the installation surface (302) of the friction ring (4) differs from the geometrical shape of the contact surface (7) of the synchronizer ring (6).

9. A method in accordance with claim 8, wherein the installation surface (302) of the friction ring (4) extends at an installation angle (α₁) and the contact surface (7) of the synchronizer ring (6) extends at a contact angle (α₂), in each case conically along the friction ring axis (5); and wherein the installation angle (α₁) is adapted to the contact angle (α₂) during the load state; and wherein the installation surface (302) of the friction ring (4) is deformed during the relief state such that the installation angle (α₁) differs from the contact angle (α₂).

10. A method in accordance with claim 8 or claim 9, wherein the installation surface (302) of the friction ring (4) has a first radius of curvature (R₁) in the peripheral direction (U) and the contact surface (7) of the synchronizer ring (6) has a second radius of curvature (R₂) in the peripheral direction (U); and wherein the first radius of curvature (R₁) of the installation surface (302) is adapted to the second radius of curvature (R₂) of the contact surface (7) during the load state; and wherein the installation surface (302) of the friction ring (4) is deformed during the relief state such that the first radius of curvature (R₁) of the installation surface (302) differs from the second radius of curvature (R₂) of the contact surface (7).

11. A friction ring (4) for an assembly (1) in accordance with any one of the claims 1 to 6, said friction ring (4) comprising a conical friction ring body (3) having a friction surface (301) and an installation surface (302) that respectively bound the friction ring body (3) in a peripheral direction (U) extending perpendicular to an axial friction ring axis (5), **characterized in that** the friction ring body (3) is configured such that the installation surface (302) of the friction ring (4) has a varying first radius of curvature (R₁) in the peripheral direction (U).

12. A friction ring in accordance with claim 11, wherein the friction ring body (3) has a separation point in the peripheral direction (U).

13. A friction ring in accordance with claim 11 or claim 12, wherein the friction ring (4) comprises sheet metal.

14. A synchronization unit (2) for a variable ratio gear transmission having an assembly (1) in accordance with any one of the claims 1 to 6.

15. A variable ratio gear transmission for a vehicle having an assembly (1) in accordance with any one of the claims 1 to 6.

## Revendications

1. Une unité de construction (1) pour une unité de synchronisation (2) d'une boîte de vitesse à roues dentées comportant
- une bague de friction (4), qui comprend un corps de bague de friction conique (3) ayant une surface de friction (301) et une surface d'installation (302), qui limitent chacun le corps de la bague de friction (3) dans une direction circonférentielle (U) s'étendant perpendiculairement à un axe de bague de friction axial (5), et
- une bague de synchronisation (6) avec une surface de contact (7) dirigée vers la surface d'installation (302) de la bague de friction (4),
**caractérisé en ce que** la bague de synchronisation (6) et la bague de friction (4) sont conçues et disposées de telle sorte que, dans un état de décharge d'un processus de synchronisation dans lequel la bague de synchronisation (6) est éloignée d'une roue dentée (8) à synchroniser, la forme géométrique de la surface d'installation (302) de la bague de friction (4) dévie de la forme géométrique de la surface de contact (7) de la bague de synchronisation (6), et que dans un état de charge du processus de synchronisation dans lequel la bague de synchronisation (6) est déplacée dans la direction de la roue dentée (8) à synchroniser, la forme géométrique de la surface d'installation (302) de la bague de friction (4) correspond à la forme géométrique de la surface de contact (7) de la bague de synchronisation (6), de sorte que la surface de contact (7) de la bague de synchronisation (6) s'applique sur toute sa surface contre la surface d'installation (302) de la bague de friction (4) et que la surface de friction (301) de la bague de friction (4) est en contact par friction avec la roue dentée (8).

2. Une unité de construction selon la revendication 1, dans laquelle la surface d'installation (302) de la bague de friction (4) s'étend selon un angle d'installation (α₁) et la surface de contact (7) de la bague de synchronisation (6) s'étend selon un angle de contact (α₂) respectivement de manière conique le long de l'axe de la bague de friction (5), et dans l'état de décharge, l'angle d'installation (α₁) et l'angle de contact (α₂) sont formés différemment, et dans l'état de charge l'angle d'installation (α₁) correspond à l'angle de contact (α₂).

3. Une unité de construction selon la revendication 2, dans laquelle l'angle d'installation (α₁) est supérieur à l'angle de contact (α₂) dans l'état de décharge.

4. Une unité de construction selon l'une des revendications 1 à 3, dans laquelle dans l'état de décharge, le corps de bague de friction (3) de la bague de friction (4) est conçu de telle sorte que la surface d'installation (302) de la bague de friction (4) présente un premier rayon de courbure (R₁) variable dans la direction circonférentielle (U).

5. Une unité de construction selon l'une des revendications 1 à 4, dans laquelle la bague de friction (4) et la bague de synchronisation (6) sont réalisées en des matériaux différents.

6. Une unité de construction selon la revendication 5, dans laquelle la bague de friction (4) est en tôle et la bague de synchronisation (6) est en laiton.

7. Une méthode de synchronisation d'une roue dentée (8) d'une boîte de vitesse à roues dentées au moyen d'une unité de construction (1) d'une unité de synchronisation (2) de la boîte de vitesse à roues dentées, l'unité de construction (1) comprenant:
- une bague de friction (4), qui présente un corps de bague de friction conique (3) ayant une surface de friction (301) et une surface d'installation (302), qui limitent chacun le corps de la bague de friction (3) dans une direction circonférentielle (U) s'étendant perpendiculairement à un axe de bague de friction axial (5), et
- une bague de synchronisation (6) avec une surface de contact (7) dirigée vers la surface d'installation (302) de la bague de friction (4), et
la méthode comprenant les étapes suivantes :
- prévoir une unité de construction (1) selon l'une des revendications 1 à 6,
- déplacer la bague de synchronisation (6) dans la direction de la roue dentée (8) à synchroniser dans un état de charge d'un processus de synchronisation, dans lequel pendant l'état de charge, la forme géométrique de la surface d'installation (302) de la bague de friction (4) et la forme géométrique de la surface de contact (7) de la bague de synchronisation (6) sont adaptées l'un à l'autre de telle sorte que la surface de contact (7) de la bague de synchronisation (6) et la surface d'installation (302) de la bague de friction (4) se touchent de manière positive dans la direction circonférentielle (U), et la surface de friction (301) de la bague de friction (4) est mise en contact par friction avec la roue dentée (8), et
- éloigner la bague de synchronisation (6) de la roue dentée (8) à synchroniser pendant un état de décharge du processus de synchronisation, dans lequel pendant l'état de décharge, la forme géométrique de la surface d'installation (302) de la bague de friction (4) ou la forme géométrique de la surface de contact (7) de la bague de synchronisation (6) est déformée de telle sorte que la forme géométrique de la surface d'installation (302) de la bague de friction (4) et la forme géométrique de la surface de contact (7) de la bague de synchronisation (6) diffèrent l'une de l'autre.

8. Une méthode selon la revendication 7, dans laquelle pendant l'état de charge, la forme géométrique de la surface d'installation (302) de la bague de friction (4) est adaptée à la forme géométrique de la surface de contact (7) de la bague de synchronisation (6), et pendant l'état de décharge, la forme géométrique de la surface d'installation (302) de la bague de friction (4) est déformée de telle sorte que la forme géométrique de la surface d'installation (302) de la bague de friction (4) dévie de la forme géométrique de la surface de contact (7) de la bague de synchronisation (6).

9. Une méthode selon la revendication 8, dans laquelle la surface d'installation (302) de la bague de friction (4) s'étend selon un angle d'installation (α₁) et la surface de contact (7) de la bague de synchronisation (6) s'étend selon un angle de contact (α₂) respectivement de manière conique le long de l'axe de la bague de friction (5), et pendant l'état de charge, l'angle d'installation (α₁) est adapté à l'angle de contact (α₂), et pendant l'état de décharge, la surface d'installation (302) de la bague de friction (4) est déformée de telle sorte que l'angle d'installation (α₁) dévie de l'angle de contact (α₂).

10. Une méthode selon la revendication 8 ou 9, dans laquelle la surface d'installation (302) de la bague de friction (4) présente un premier rayon de courbure (R₁) dans la direction circonférentielle (U) et la surface de contact (7) de la bague de synchronisation (6) présente un second rayon de courbure (R₂) dans la direction circonférentielle (U), et pendant l'état de charge, le premier rayon de courbure (R₁) de la surface d'installation (302) est adapté au second rayon de courbure (R₂) de la surface de contact (7), et pendant l'état de décharge, la surface d'installation (302) de la bague de friction (4) est déformée de telle sorte que le premier rayon de courbure (R₁) de la surface d'installation (302) dévie du second rayon de courbure (R₂) de la surface de contact (7).

11. Une bague de friction (4) pour une unité de construction (1) selon l'une des revendications 1 à 6, ladite bague de friction (4) comprend un corps de bague de friction conique (3) ayant une surface de friction (301) et une surface d'installation (302), qui limitent chacun le corps de la bague de friction (3) dans une direction circonférentielle (U) s'étendant perpendiculairement à un axe de bague de friction axial (5), **caractérisé en ce que** le corps de bague de friction (3) est conçu de telle sorte que la surface d'installation (302) de la bague de friction (4) présente un premier rayon de courbure (R₁) variable dans la direction circonférentielle (U).

12. Une bague de friction selon la revendication 11, le corps de bague de friction (3) ayant un point de séparation dans la direction circonférentielle (U).

13. Une bague de friction selon la revendication 11 ou 12, la bague de friction (4) étant en tôle.

14. Une unité de synchronisation (2) pour une boîte de vitesse à roues dentées avec une unité de construction (1) selon l'une des revendications 1 à 6.

15. Une boîte de vitesse à roues dentées pour un véhicule avec une unité de construction (1) selon l'une des revendications 1 à 6.
